# EUROPÄISCHE PATENTSCHRIFT

(11) **EP 0 460 466 B1**
(45) Veröffentlichungstag und Bekanntmachung des Hinweises auf die Patenterteilung: **06.04.1994**
(21) Anmeldenummer: 91108431.7
(22) Anmeldetag: 24.05.1991
(51) Int. Cl.: B01F 7/04

(54) **Selbstreinigender Reaktor/Mischer mit grossem Nutzvolumen**
Self-cleaning reactor-mixer with large usable volume
Réacteur/mélangeur autonettoyant avec un grand volume utilisable

(30) Priorität: 06.06.1990 DE 4018069
(43) Veröffentlichungstag der Anmeldung: 11.12.1991
(73) Patentinhaber: BAYER AG, 51368 Leverkusen (DE)
(72) Erfinder: Schuchardt, Heinrich, W-4150 Krefeld (DE); Ullrich, Martin, W-5090 Leverkusen 1 (DE)

(56) Entgegenhaltungen:
- EP-A- 0 262 594
- EP-A- 0 329 092
- WO-A-88/04198
- DE-A- 2 012 294
- FR-A- 1 197 720
- FR-A- 2 396 585
- PATENT ABSTRACTS OF JAPAN, vol. 13, no. 29 (C-562)[3377], 23rd January 1989;& JP-A-63 232 828 (MITSUBISHI) 28-09-1988
- PATENT ABSTRACTS OF JAPAN, vol. 11, no. 80 (C-409)[2527], 11th March 1987;& JP-A-61 234 917 (MITSUBISHI) 20-10-1986

## Beschreibung

Die Erfindung betrifft Scheibenreaktoren mit großem freien nutzbaren Volumen, die sich kinematisch selbst reinigen, bestehend aus zwei oder mehreren parallelen gleichsinnig oder gegensinnig rotierenden Achsen, auf denen sich axial versetzte nicht notwendigerweise kreisförmige Scheiben mit auf ihrem Umfang verteilten Abstreifern befinden, und einem umschließenden Gehäuse.

Die Erfindung richtet sich auf Vorrichtungen zur verfahrenstechnischen Behandlung von Fluiden und kohäsiven Schüttgütern. Die Vorrichtungen sind weitgehend kinematisch selbstreinigend und weisen ein großes freies Nutzvolumen auf.

### Stand der Technik

Unter anderem bei der Erzeugung und Verarbeitung von Kunststoffen müssen hochviskose Flüssigkeiten verfahrenstechnisch behandelt werden. Insbesondere werden Apparate zum Mischen und Ausdampfen benötigt. Diese müssen eine gute Mischwirkung und im Falle der Ausdampfung auch eine schnelle Erneuerung der freien Oberflächen bewirken.

Produktablagerungen an den Wandungen solcher Mischer können zu Verfahrensbeeinträchtigungen führen. In den Ablagerungen werden unerwünschte Nebenreaktionen auf Grund der wesentlich verlängerten Verweilzeit begünstigt. Dies führt zur Verunreinigung des Produktes. Produktablagerungen an den Wandungen können durch kinematische Selbstreinigung des Mischers vermieden werden.

Das Ziel der Selbstreinigung erreichen z.B. bekannte gleich- und gegensinnige Zweiwellenextruder, ebenso einwellige Kneter mit axial oszillierender Bewegung. Ihren Bauformen gemein ist ein geringes freies, nutzbares Volumen. Nur ein kleiner Teil des Gesamtvolumens eines solchen Extruders steht für das Produkt zur Verfügung.

Im Hinblick auf die Minimierung der Apparatekosten ist aber ein großes freies Volumen anzustreben.

Ein hohes freies Volumen wird von sogenannten Scheibenreaktoren erreicht. In der einwelligen Ausführung besteht der Rotor des Scheibenreaktors aus einer Welle auf der axial versetzt Scheiben angeordnet sind, die auf dem Umfang Abstreifelemente tragen, welche den größten Teil der Gehäusewandung abreinigen. Typischerweise sind an der Gehäusewandung stehende Abstreifer angeordnet, die die Welle und die Scheiben abreinigen sollen.

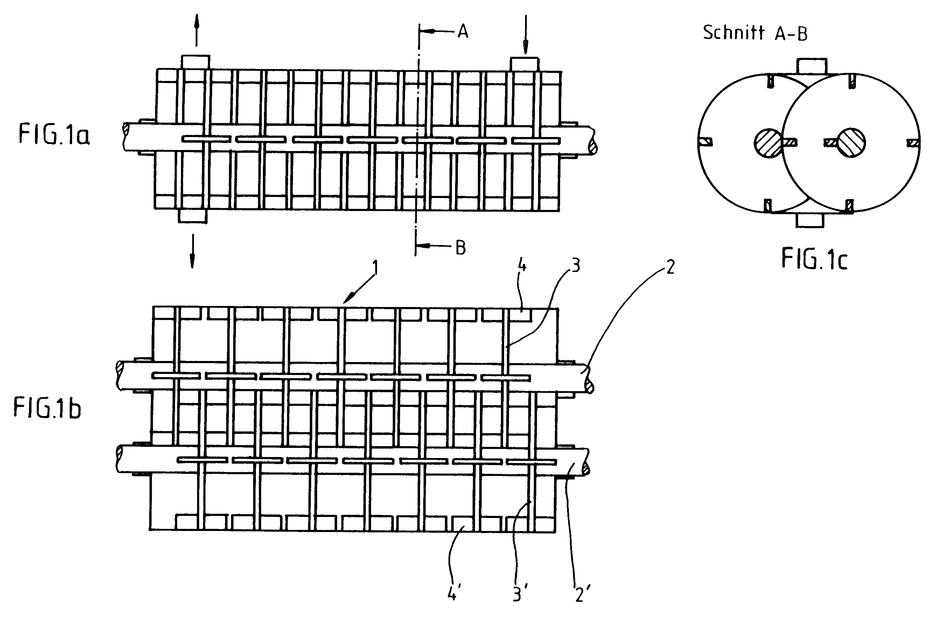

Der prinzipielle Aufbau eines zweiwelligen Scheibenreaktors ist in Fig. 1 dargestellt. Auf den Wellen sind in axialer Richtung abwechselnd Scheiben angeordnet. Diese tragen auf ihrem Umfang Abstreifelemente. Diese sollen die Gehäusewandung, sowie die Welle, die Scheiben als auch die Abstreifelemente der anderen Welle abreinigen.

Den bekannten Ausführungen von Scheibenreaktoren gemein ist ein Abreinigungsgrad (kinematisch abgereinigte Fläche/gesamte produktberührte Oberfläche des Apparates) von in der Regel kleiner 70 %. Dies beruht darauf, daß im einwelligen Fall die Abstreifelemente nicht allseitig abgereinigt werden und im zweiwelligen Fall auch die Scheiben nur in beschränktem Maße gereinigt werden.

Ein wirksamer Mischer, der sowohl ein hohes Maß an Selbstreinigung (deutlich über 70 %) als auch ein großes freies, nutzbares Volumen aufweist, ist nicht bekannt.

Ziel der Erfindung ist die Schaffung eines Apparates, der beide Bedingungen erfüllt.

Die Aufgabe wird dadurch gelöst, daß ein mehrwelliger Mischer (siehe Fig. 1) auf jeder Welle 2 auf versetzt sitzenden Scheiben 3 Abstreifelemente 4 besitzt, die so gestaltet sind, daß sie sowohl die Wandung der Mischkammer 1, die Wellen 2, die Scheibenstirnflächen, als auch sich gegenseitig reinigen.

Inhalt der Erfindung sind zwei unabhängige Lösungen für gleichsinnige, Rotation einerseits und für gegensinnige Rotation andererseits.

Gegenstand der Erfindung ist ein Scheibenreaktor bestehend aus zwei oder mehr parallelen gleichsinnig rotierenden Achsen, auf denen sich axial versetzte, nicht notwendigerweise kreisförmige Scheiben mit auf ihrem Umfang verteilten Abstreifern befinden, und einem umschließenden Gehäuse, in dem die Abstreifelemente zum einen durch Flächen begrenzt werden, deren Normalenvektor im Radialschnitt eine Komponente weg von der Rotationsachse besitzen. Diese sind konvex. Sie berühren entweder Flächen auf dem anderen Rotor, die ebenfalls konvex sind und eine Komponente des Normalenvektors weg von der Rotationsachse besitzen, und werden dadurch kinematisch abgereinigt, oder sie berühren die Gehäusewandung.

Unter Berühren wird die kleinstmögliche Annäherung der genannten Teile des Reaktors verstanden, die bei Berücksichtigung der Fertigungstoleranzen erreicht werden kann, so daß die genannten Teile ohne Blockierung der Rotation der Achsen aneinander vorbeigleiten können.

Zum anderen werden die Abstreifelemente durch Flächen begrenzt, deren Normalenvektor eine Komponente hin zur Rotationsachse besitzen. Jeder konkaven Fläche entspricht eine konvexe Fläche auf dem anderen Rotor, die ebenfalls eine Komponente des Normalenvektors hin zur Rotationsachse hat.

Die konvexen Flächen können bei einem Krümmungsradius von null jeweils zu einer Kante entarten.

Bevorzugt wird eine Ausführungsform des Reaktors mit rotationssymmetrischen Rotoren, in dem der langsamer rotierende Rotor n-fach symmetrisch ausgebildet ist mit n >4.

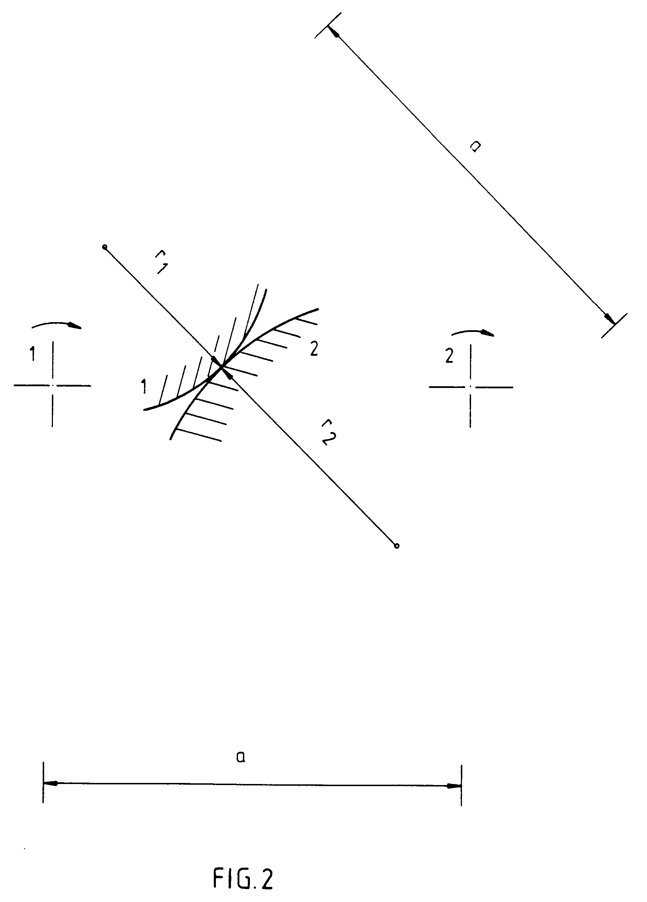

Aus der Verwendung von zweiwelligen Extrudern ist bekannt, daß eine Abreinigung von Flächen, deren Normalenvektor eine Komponente weg von der Rotationsachse besitzt, genau dann möglich ist, wenn in einem Radialschnitt im Berührungspunkt die Summe der Radien r₁ + r₂ der einander berührenden Flächen gleich dem Achsabstand a ist (siehe Fig. 2).

Als Sonderfall ist hier zu betrachten, daß der Radius gleich null ist, dann handelt es sich nicht um eine Fläche, sondern um eine Kante.

Für Flächen, deren Normalenvektor eine Komponente hin zu der Rotationsachse besitzt, ist eine spezielle Lösung in der Europäischen Patentoffenlegungsschrift 269913 beschrieben. Flächen mit einer Normalenkomponente zur Rotationsachse sind entweder eben und werden von einer ebensolchen ebenen Fläche berührt und dadurch abgereinigt oder konkav mit einem Krümmungsradius gleich dem Achsabstand und werden von einer Kante berührt und dadurch abgereinigt. In der Mischvorrichtung nach EP-A-269 913 sind die Scheiben mit den Abstreifern nicht axial versetzt auf den Achsen angeordnet. Eine verallgemeinerte Lösung liegt nicht vor.

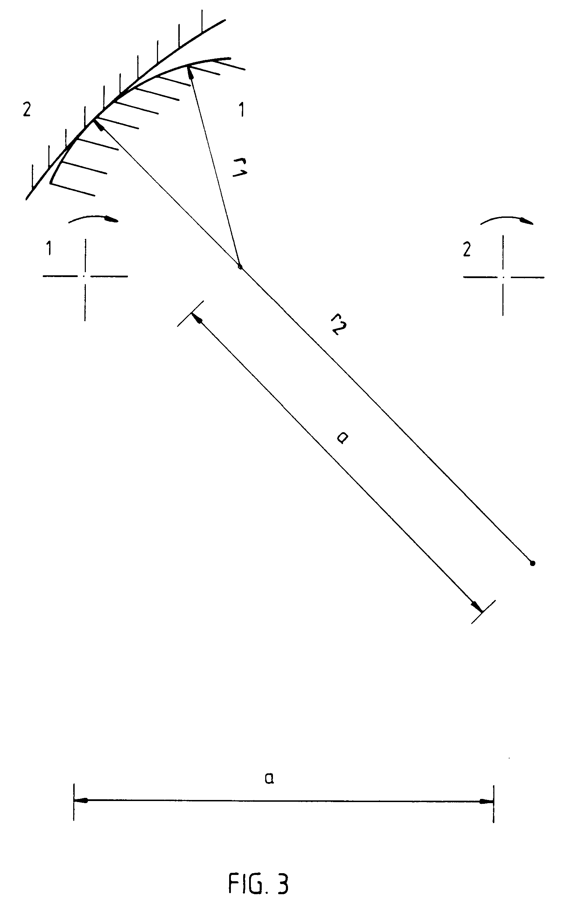

Eine Abreinigung ist hier möglich, wenn in einem Radialschnitt im Berührungspunkt die Differenz der Radien r₂ - r₁ der einander berührenden Flächen gleich dem Achsabstand a ist und die weniger gekrümmte Fläche konkav ist (siehe Fig. 3).

Die in EP-A-269913 beschriebenen Lösungen stellen hier Sonderfälle dar. Als ein Sonderfall ist hier zu betrachten, daß der Krümmungsradius unendlich ist, das heißt, daß die Fläche eben ist. Dann ist auch die Gegenfläche eben. Ein anderer Sonderfall ergibt sich, wenn der Radius der konvexen Fläche gleich null wird. Es ergibt sich eine Kante.

Gegenstand der Erfindung ist somit auch ein Scheibenreaktor bestehend aus zwei oder mehr gleichsinnig, gleichschnell rotierenden parallelen Achsen auf denen sich axial versetzte nicht notwendigerweise kreisförmige Scheiben mit auf ihren Umfang verteilten Abstreifern befinden, und einem umschließenden Gehäuse, in dem zwei Flächen, deren Normalenvektor in einem Radialschnitt, jeweils eine Komponente weg von der jeweiligen Rotationsachse hat, einander berühren, wenn die Summe der Krümmungsradien im Berührungspunkt gleich dem Achsabstand ist (Im Falle unendlich kleiner Krümmungsradien ergeben sich Kanten.),
und in dem
in einem Radialschnitt zwei Flächen, von denen mindestens eine eine Komponente hin zu der jeweiligen Rotationsachse hat, einander berühren, wenn die Differenz der Krümmungsradien im Berührungspunkt gleich dem Achsabstand ist und die weniger gekrümmte Fläche konkav ist. (Im Falle unendlicher Krümmungsradien ergeben sich Ebenen.)

Bevorzugt ist eine Ausführungsform des erfindungsgemäßen Reaktors in der die Abstreifelemente n-fach symmetrisch um die Rotorenachse verteilt sind, wobei n eine Zahl größer oder gleich 2, bevorzugt größer als 4, besonders bevorzugt 5, bedeutet.

Vom gegensinnig rotierenden System ist bekannt, daß im Radialschnitt ein Punkt eines Rotors eine Zykloidenkurve im Bezugsystem des anderen Rotors beschreibt.

Daraus ergibt sich, daß ein Abstreifelement eines Scheibenreaktors, genau dann komplett kinematisch abgereinigt wird, wenn sein Umfang durch die Zykloidenkurven beschränkt wird, die die Umfangspunkte der Abstreifelemente des anderen Rotors beschreiben.

Entsprechend der Form der Zykloidenkurven sind alle nach außen zeigenden Flächen konvex, während die Flächen mit einem Normalenanteil zur Rotationsachse konkav sind.

Die erfinderische Aufgabe war es eine geeignete Anordnung der Abstreifelemente zu finden, die es gestattet, daß alle Abstreifelemente allseitig abgereinigt werden.

Die erfinderische Lösung besteht darin, alle Abstreifelemente so anzuordnen, daß ihre Hauptausdehnung mit dem Radius einen Winkel einschließt, und alle Abstreifelemente eines Rotors nach außen fördern und alle des anderen Rotors nach innen.

Dadurch wird es möglich, daß beim Eintritt in den Eingriffsbereich des anderen Rotors die Schmalseiten eines Abstreifelementes die Längsseiten zweier Abstreifelemente des anderen Rotors abreinigen, während beim Austritt die Längsseiten zweier Abstreifelemente des einen Rotors die Schmalseiten zweier Abstreifelemente des anderen Rotors abreinigen.

Wenn nun auf einem Rotor nur nach außen fördernde Elemente und auf dem anderen Rotor nur nach innen fördernde Elemente angeordnet wären, wäre zu erwarten, daß das Torsionsmoment und damit auch der Torsionswinkel der Wellen über ihre axiale Ausdehnung unterschiedlich wäre und somit über die Länge wechselnde Spiele bis hin zum Klemmen auftreten könnten.

Dies kann verhindert werden, indem auf einer Welle einander in axialer Richtung nach außen und nach innen fördernde Elemente abwechseln.

In beiden Fällen (gleichsinnige und gegensinnige Rotation) kann eine axiale Förderung dadurch erreicht werden, daß die Abstreifer in ihrer axialen Ausdehnung spiralförmig verdreht ausgeführt werden.

Gegenstand der Erfindung ist ferner ein mehrwelliger Scheibenreaktor bestehend aus zwei oder mehreren gegensinnig rotierenden parallelen Achsen, auf denen sich axial versetzte, nicht notwendigerweise kreisförmige Scheiben mit auf dem Umfang verteilten Abstreifelementen befinden und einem umschließenden Gehäuse
dadurch gekennzeichnet, daß im Radialschnitt die Hauptausdehnung der Abstreifelemente einen Winkel mit dem Radius einschließt,
daß in einem Radikalschnitt alle Abstreifer eines Rotors nach außen fördern, während die Abstreifer eines im Eingriff befindlichen gegenläufigen Rotors alle nach innen fördern,
daß in einem Radialschnitt alle begrenzenden Flächen eines Abstreifers, deren Normalenvektor eine Komponente weg von der Rotationsachse hat, konvex sind, während alle Flächen eines Abstreifers, deren Normalenvektor eine Komponente hin zur Rotationsachse hat, konkav sind.

In einer bevorzugten Ausführungsform des Scheibenreaktors mit gegensinnig rotierenden Achsen wechseln sich auf einem Rotor nach außen und nach innen fördernde Abstreifer in axialer Richtung ab.

In den Ausführungsformen der Erfindung, dem Scheibenreaktor mit gegensinnig rotierenden Achsen sowie dem Scheibenreaktor mit gleichsinnig rotierenden Achsen kann die Mischwirkung der Reaktoren erhöht werden, indem man auf einem oder mehreren kleineren Radien im Verhältnis zum Scheibenradius zusätzliche Abstreifelemente auf den Scheiben anbringt. Die Abstreifelemente können bei den erfindungsgemäßen Scheibenreaktoren auf den Scheiben in axialer Richtung betrachtet um einen Winkel versetzt angeordnet sein, um eine Vergleichmäßigung der Antriebsdrehmomente zu erreichen.

Nachstehend wird die Beschreibung der Erfindung anhand der beigefügten Zeichnungen näher erläutert.

Es zeigen:
- Fig. 1:: Prinzipieller Aufbau eines bekannten zweiwelligen Scheibenreaktors.
- Fig. 2:: Prinzipielle Darstellung der geometrischen Bedingung für die Abreinigung einander berührender konvexer Flächen bei zweiwelligen Scheibenreaktoren mitgleichsinnig drehenden Achsen.
- Fig. 3:: Prinzipielle Darstellung der geometrischen Bedingung für die Abreinigung einer konkaven und einer konvexen Fläche die einander berühren, bei zweiwelligen Scheibenreaktoren mit gleichsinnig drehenden Achsen.
- Fig. 4:: Radialschnitt entsprechend einem Schnitt A-B aus Fig. 1 durch einen erfindungsgemäßen Scheibenreaktor mit gleichsinnig, gleichschnell drehenden Rotoren und 5 Abstreifelementen mit ebenen Innenflächen auf jeder Scheibenstirnfläche.
- Fig. 5:: Relativbewegung eines Abstreifers 51-52-53-54 des einen Rotors eines Scheibenreaktors wie in Fig. 4 bezüglich eines anderen Rotors in Momentaufnahmen.
- Fig. 6:: Radialschnitt durch einen erfindungsgemäßen Scheibenreaktor mit gleichsinnig, gleichschnell rotierenden Achsen und 7 Abstreifern mit konkaven Innenflächen auf jeder Scheibenstirnfläche.
- Fig. 7:: Radialschnitt durch einen erfindungsgemäßen Scheibenreaktor mit gegensinnig, gleichschnell rotierenden Achsen und 10 Abstreifern auf jeder Scheibenstirnfläche.
- Fig. 8:: Relativbewegung eines Abstreifers 81-82-83-84 des einen Rotors bezüglich eines anderen Rotors eines Scheibenreaktors wie in Fig. 7 in Momentaufnahmen.
- Fig. 9:: Relativbewegung aller Abstreifer eines Rotors bezüglich eines anderen Rotors eines Scheibenreaktors wie in Fig. 7 in Momentaufnahmen.

### Beispiele

In Fig. 1 ist der Grundaufbau eines bekannten mehrwelligen Scheibenreaktors gezeigt.

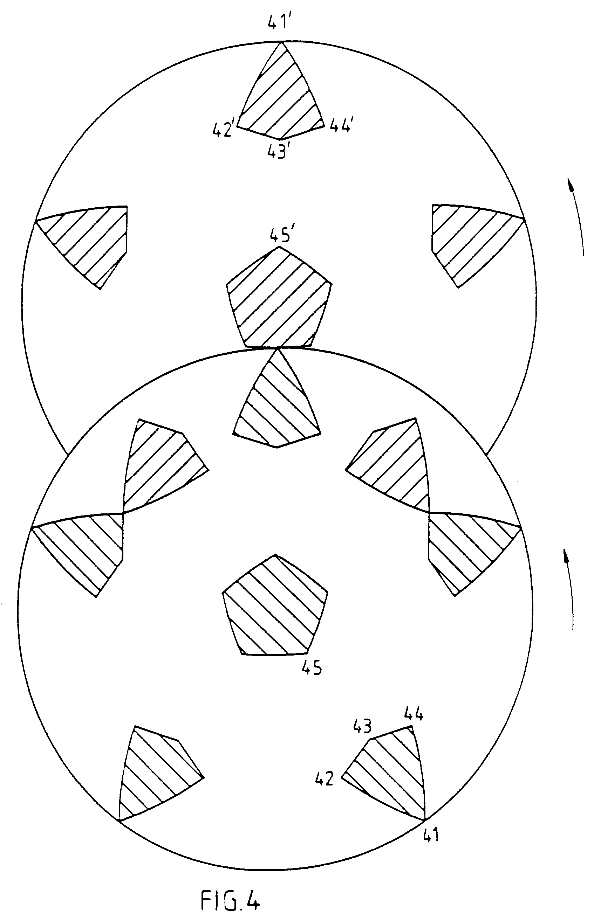

Für das Verständnis der Kinematik sind Radialschnitte durch die Abstreifelemente ausschlaggebend. Entsprechend ist in den Figuren 4 ff jeweils ein Schnitt entsprechend dem Schnitt A-B aus Fig. 1 dargestellt.

### Beispiel 1

Scheibenreaktor mit gleichsinnig, gleichschneller Rotation der beiden Achsen

Fig. 4 zeigt eine mögliche Anordnung von Abstreifelementen 4 bzw. 4' in Fig. 1.

Auf der Scheibe 3 in Fig. 1 sind rotationssymmetrisch 5 Abstreifelemente 4 angeordnet. Auf Grund der Rotationssymmetrie werden die auftretenden Antriebsmomente weitgehend vergleichmäßigt. Die Anzahl von 5 Abstreifelementen 4 ermöglicht einen geringen Achsdurchmesser und damit ein großes freies Volumen. Ein kleinerer Achsdurchmesser ist nur mit einem Symmetriegrad von 8 oder höher zu erreichen. Bei mehr als 5 Abstreifelementen entsteht in der Mitte zwischen den Rotoren ein schlecht gemischter Bereich. Hier ist eine Verbesserung dann nur durch einen zusätzlichen Kranz von Abstreifern 4 auf einem kleineren Radius zu erreichen.

Die Reinigung der nach außen liegenden Flächen 41-42, 44-41, 45-45 erfolgt durch Kanten 41' der Abstreifer 4' des anderen Rotors. Folglich muß, da die Summe der Krümmungsradien gleich dem Achsabstand sein muß, der Radius der gereinigten Fläche der Achsabstand sein.

Die Reinigung der nach innen liegenden Flächen 42-43, 43-44 erfolgt durch ebene Flächen 42'-43', 43'-44' der Abstreifer 4' des anderen Rotors. Folglich muß, da die Differenz der Krümmungsradien gleich dem Achsabstand sein muß und der Krümmungsradius einer Ebene unendlich ist, auch die Gegenfläche 42-43, 43-44 eben sein.

Die Kanten 41, 41' reinigen ebenfalls die Gehäusewandung 1 in Fig. 1.

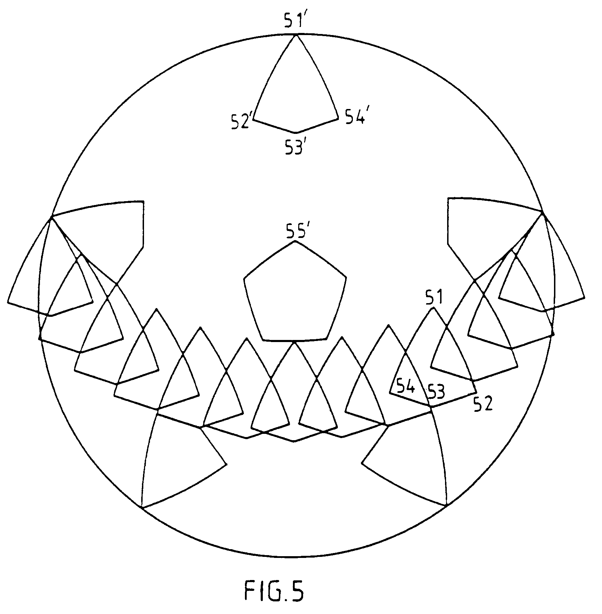

Fig. 5 zeigt die Relativbewegung eines Abstreifers 51-52-53-54 bezüglich des anderen Rotors in Momentaufnahmen.

Es wird ersichtlich, daß die Stirnflächen der Scheiben 3 in Fig. 1, wenn diese nicht kreisförmig, sondern zwischen den Abstreifern zur Mitte eingezogen sind vollständig abgereinigt werden.

Die Antriebsdrehmomente weisen Spitzen bei der Berührung der Innenflächen 52-53, 53-54 auf. Eine Vergleichmäßigung ist erreichbar, wenn die Abstreifelemente 4 bzw. 4' auf den einander folgenden Scheiben 3 bzw. 3' gegeneinander verdreht angeordnet werden.

### Beispiel 2

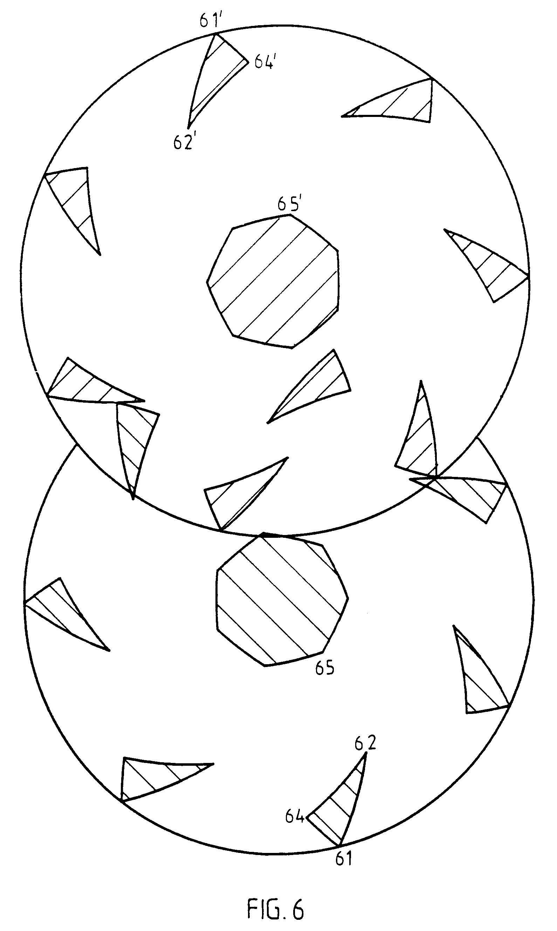

In Fig. 6 ist der Radialschnitt durch einen Scheibenreaktor mit gleichsinnig gleichschnell rotierenden Achsen wiedergegeben, in dem 7 Abstreifelemente auf der Scheibe rotationssymmetrisch angeordnet sind. Im Unterschied zu Beispiel 1 ist hier die konvexe Fläche mit einer Komponente des Normalvektors hin zur Rotationsachse zu einer Kante 62 geschrumpft. Da die Differenz der Krümmungsradien gleich dem Achsabstand sein muß, ist entsprechend der Radius der konkaven Innenfläche gleich dem Achsabstand. Die Antriebsdrehmomentspitzen werden hierdurch gegenüber Beispiel 1 wesentlich gemindert. Die Reinigung der nach außen liegenden Flächen 61-62, 64-61, 65-65 erfolgt durch die Kanten 61' der Abstreifer des anderen Rotors.

Die Reinigung der nach innen liegenden Flächen 62-64 erfolgt durch die Kanten 62' der Abstreifer des anderen Rotors.

Auch in diesem Beispiel reinigen die Kanten 61 und 61' die Gehäusewand.

### Beispiel 3

### gegensinnige Rotation

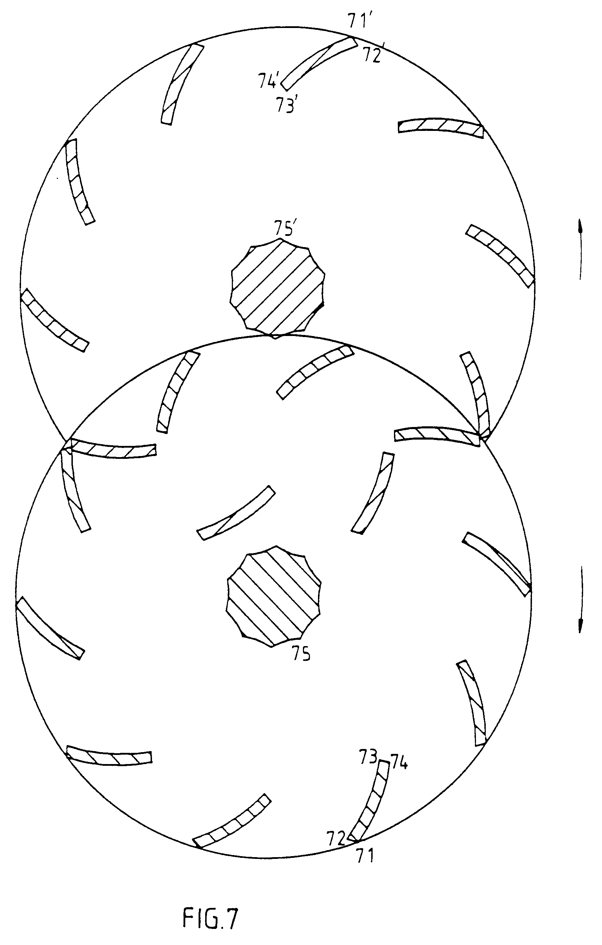

Fig. 7 zeigt eine mögliche Anordnung von Abstreifelementen 4 bzw. 4' in Fig. 1 bei einem Scheibenreaktor mit gegensinnig, gleichschnell rotierenden Achsen.

Zur Vergleichmäßigung der Antriebsmomente sind die Rotoren rotationssymmetrisch aufgebaut. Eine Minimierung der Antriebsmomente und der nichtgereinigten Scheibenstirnflächen wird durch möglichst schmale Abstreifelemente erreicht.

Die Reinigung der Flächen 71-72 erfolgt durch die Flächen 72'-73', die Reinigung der Flächen 72-73 durch die Flächen 71'-72', die der Flächen 73-74 durch die Flächen 74'-71', die der Flächen 74-71 durch die Flächen 73'-74', die der Flächen 75-75 durch die Kanten 71'. Die Kanten 71 bzw. 71' reinigen ebenso die Gehäusewandung 1 in Fig. 1.

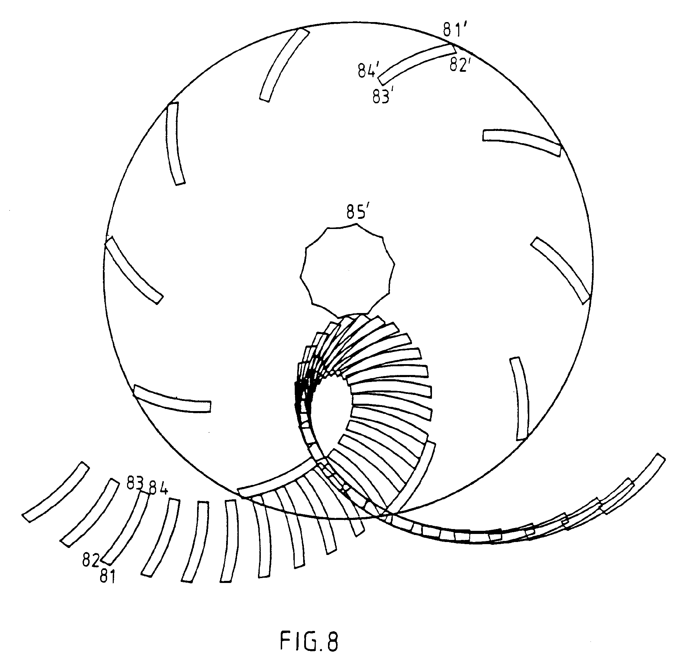

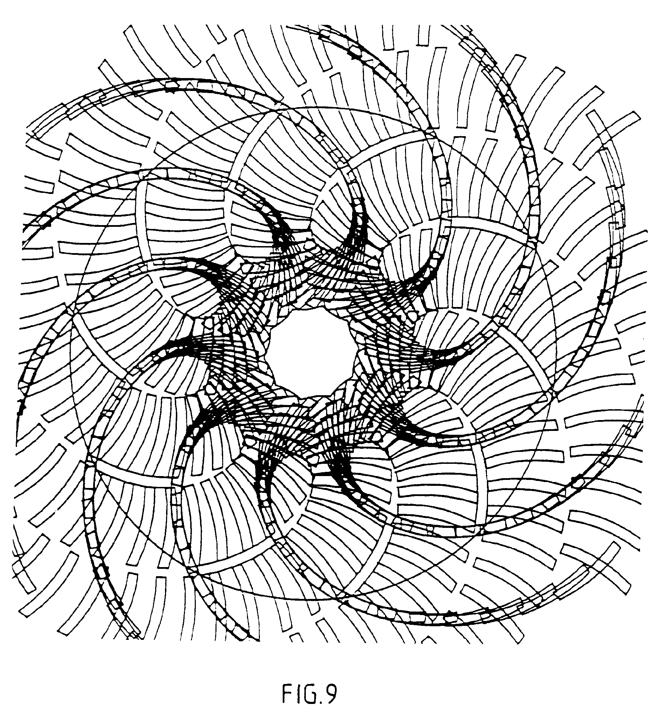

Fig. 8 zeigt die Relativbewegung eines Abstreifers 81-82-83-84 bezüglich des anderen Rotors in Momentaufnahmen während einer halben Umdrehung. In Fig. 9 sind die Relativbewegungen aller Abstreifers 4 eines Rotors 2 bzgl. des anderen Rotors 2' eingezeichnet. Es wird ersichtlich, daß die Stirnflächen der Scheiben 3 in Fig. 1 fast gänzlich abgereinigt werden.

## Patentansprüche

1. Scheibenreaktor bestehend aus zwei oder mehreren parallelen gleichsinnig rotierenden Achsen, auf denen sich axial versetzte, nicht notwendigerweise kreisförmige Scheiben mit auf dem Umfang verteilten Abstreifern befinden, und einem umschließenden Gehäuse dadurch gekennzeichnet,
daß in einem Radialschnitt alle begrenzenden Flächen eines Abstreifers durch Abstreifer eines im Eingriff befindlichen Rotors oder durch das umschließende Gehäuse berührt werden,
daß alle begrenzenden Flächen eines Abstreifers, deren Normalenvektor in einem Radialschnitt eine Komponente weg von der Rotationsachse hat, konvex sind,
daß diese Flächen durch konvexe Flächen mit Normalenvektor mit einer Komponente weg von der Rotationsachse eines Abstreifers des anderen Rotors oder durch die Gehäusewandung berührt werden,
und daß in einem Radialschnitt, bei sich einander berührenden Flächen, von denen mindestens eine eine Komponente des Normalenvektors hin zu der jeweiligen Rotationsachse hat, die eine Fläche konkav und die andere konvex ausgebildet ist.

2. Vorrichtung gemäß Anspruch 1 mit rotationssymmetrischen Rotoren, dadurch gekennzeichnet, daß der langsamer rotierende Rotor n-fach rotationssymmetrisch ausgebildet ist mit n >4.

3. Scheibenreaktor bestehend aus zwei oder mehreren parallelen gleichsinnig und gleichschnell rotierenden Achsen, auf denen sich axial versetzte, nicht notwendigerweise kreisförmige Scheiben mit auf dem Umfang verteilten Abstreifern befinden, und einem umschließenden Gehäuse dadurch gekennzeichnet,
daß, bei einander berührenden Flächen der Abstreifer, deren Normalenvektor in einem Radialschnitt jeweils eine Komponente weg von der jeweiligen Rotationsachse hat, die Summe der Krümmungsradien im Berührungspunkt gleich dem Achsabstand ist,
daß in einem Radialschnitt, bei einander berührenden Flächen, von denen mindestens eine eine Komponente des Normalenvektors hin zu der jeweiligen Rotationsachse hat, die Differenz der Krümmungsradien im Berührungspunkt gleich dem Achsabstand ist und die weniger gekrümmte Fläche konkav ist.

4. Vorrichtung nach Anspruch 3, dadurch gekennzeichnet, daß die Abstreifelemente n-fach symmetrisch um die Rotorenachse verteilt sind, wobei n eine Zahl größer oder gleich 2 bedeutet.

5. Vorrichtung nach Anspruch 4, dadurch gekennzeichnet, daß die Abstreifelemente n-fach symmetrisch um die Rotorenachse verteilt sind, wobei n eine Zahl größer als 4 bedeutet.

6. Vorrichtung nach Anspruch 4, dadurch gekennzeichnet, daß die Abstreifelemente 5-fach symmetrisch um die Rotorenachse verteilt sind.

7. Gegensinnig rotierender mehrwelliger Scheibenreaktor bestehend aus zwei oder mehr parallelen Achsen, auf denen sich axial versetzte, nicht notwendigerweise kreisförmige Scheiben mit auf dem Umfang verteilten Abstreifelementen befinden und einem umschließenden Gehäuse dadurch gekennzeichnet,
daß im Radialschnitt die Hauptausdehnung der Abstreifelemente einen Winkel mit dem Radius einschließt,
daß in einem Radialschnitt alle Abstreifer eines Rotors nach außen fördern, während die Abstreifer eines im Eingriff befindlichen gegenläufigen Rotors alle nach innen fördern,
daß alle begrenzenden Flächen eines Abstreifers, deren Normalenvektor in einem Radialschnitt eine Komponente weg von der Rotationsachse hat, konvex sind, während alle Flächen eines Abstreifers, deren Normalenvektor eine Komponente hin zur Rotationsachse hat, konkav sind.

8. Vorrichtung nach Anspruch 7, dadurch gekennzeichnet, daß auf einem Rotor in axialer Richtung sich nach außen und nach innen fördernde Abstreifer abwechseln.

9. Vorrichtung nach Anspruch 1 bis 2 oder Anspruch 3 oder Anspruch 7 bis 8, dadurch gekennzeichnet, daß die Abstreifer in ihrer axialen Ausdehnung spiralförmig verdreht ausgeführt sind.

10. Vorrichtung nach Anspruch 1 bis 2 oder Anspruch 3 bis 6 oder Anspruch 7 bis 9, dadurch gekennzeichnet, daß zusätzliche Abstreifelemente auf den Scheiben auf einem kleineren Radius verteilt sind.

11. Vorrichtung nach einem der Ansprüche 1 bis 9, dadurch gekennzeichnet, daß die Abstreifelemente auf den Scheiben in axialer Richtung betrachtet um einen Winkel versetzt angeordnet sind.

## Claims

1. Disc reactor consisting of two or more parallel shafts rotating in the same direction, on which are located axially staggered, not necessarily circular, discs with scrapers distributed over the periphery, and an enclosing casing, characterized in that
in a radial section all bounding surfaces of a scraper are touched by scrapers of a rotor in engagement or by the enclosing casing,
in that all bounding surfaces of a scraper whose normal vector in a radial section has a component away from the axis of rotation are convex,
in that these surfaces are touched by convex surfaces with normal vector with a component away from the axis of rotation of a scraper of the other rotor or by the casing wall,
and in that in a radial section, for surfaces touching each other, at least one of which has a component of the normal vector towards the axis of rotation concerned, the one surface is concave and the other convex.

2. Apparatus according to Claim 1 with rotationally symmetrical rotors, characterized in that the more slowly rotating rotor is constructed with n-fold rotational symmetry, where n>4.

3. Disc reactor consisting of two or more parallel shafts rotating in the same direction and at the same speed, on which are located axially staggered, not necessarily circular, discs with scrapers distributed over the periphery, and an enclosing casing, characterized in that for surfaces of the scrapers touching each other, each of whose normal vectors in a radial section has a component away from the axis of rotation concerned, the sum of the radii of curvature at the point of contact is equal to the distance between the shafts,
and in that in a radial section, for surfaces of the scrapers touching each other of which at least one has a component of the normal vector towards the axis of rotation concerned, the difference of the radii of curvature at the point of contact is equal to the distance between the shafts, and the surface of lower curvature is concave.

4. Apparatus according to Claim 3, characterized in that the scraper elements are distributed around the rotor axis with n-fold symmetry, where n is a number greater than or equal to 2.

5. Apparatus according to Claim 4, characterized in that the scraper elements are distributed around the rotor axis with n-fold symmetry, where n is a number greater than 4.

6. Apparatus according to Claim 4, characterized in that the scraper elements are distributed with 5-fold symmetry around the rotor axis.

7. Multi-shaft disc reactor consisting of two or more parallel shafts rotating in opposite directions, on which are located axially staggered, not necessarily circular, discs with scrapers distributed over the periphery, and an enclosing casing, characterized in that
in a radial section the principal dimension of the scraper elements makes an angle with the radius,
in that in a radial section all scrapers of one rotor deliver outwards, while the scrapers of a rotor in engagement and rotating in the opposite direction all deliver inwards,
and in that all bounding surfaces of a scraper whose normal vector in a radial section has a component away from the axis of rotation are convex, while all surfaces of a scraper whose normal vector has a component towards the axis of rotation are concave.

8. Apparatus according to Claim 7, characterized in that on a rotor scrapers delivering outwards and delivering inwards alternate in the axial direction.

9. Apparatus according to Claims 1 to 2 or Claim 3 or Claims 7 to 8, characterized in that the scrapers are made spirally twisted in their axial dimension.

10. Apparatus according to Claims 1 to 2 or Claims 3 to 6 or Claims 7 to 9, characterized in that additional scraper elements are distributed on the discs on a smaller radius.

11. Apparatus according to one of Claims 1 to 9, characterized in that the scraper elements are arranged on the discs displaced by an angle when viewed in the axial direction.

## Revendications

1. Réacteur à plateaux consistant en deux axes ou plus parallèles, tournant dans le même sens, sur lesquels se trouvent des plateaux décalés axialement, non nécessairement circulaires, avec des éléments de raclage répartis sur la périphérie, et un carter enfermant, caractérisé en ce,
que dans une coupe radiale, toutes les surfaces limitant d'un élément de raclage sont amenées en contact par des éléments de raclage d'un rotor se trouvant en prise ou par le carter enfermant,
que toutes les surfaces limitant d'un élément de raclage, dont le vecteur normal dans une coupe radiale a une composante s'éloignant de l'axe de rotation, sont convexes,
que ces surfaces sont mises en contact par des surfaces convexes avec un vecteur normal avec une composante s'éloignant de l'axe de rotation d'un élément de raclage de l'autre rotor ou par la paroi de carter,
et en ce que dans une coupe radiale, lors de surfaces venant en contact l'une avec l'autre, desquelles au moins une a une composante du vecteur normal se dirigeant chaque fois vers l'axe de rotation, l'une des surfaces est constituée concave et l'autre convexe.

2. Dispositif selon la revendication 1, avec des rotors symétriques en rotation, caractérisé en ce que le rotor tournant le plus lentement est constitué n fois symétrique en rotation, avec n > 4.

3. Réacteur à plateaux consistant en deux axes ou plus parallèles, tournant dans le même sens et à la même vitesse, sur lesquels se trouvent des plateaux décalés axialement, non nécessairement circulaires, avec des éléments de raclage répartis sur la périphérie, et un carter enfermant, caractérisé en ce,
que, lors de surfaces des éléments de raclage venant en contact l'une avec l'autre, dont le vecteur normal dans une coupe radiale a chaque fois une composante s'éloignant chaque fois de l'axe de rotation, la somme des rayons de courbure dans le point de venue en contact est égale à l'espacement axial,
que dans une coupe radiale, lors de surfaces venant en contact l'une avec l'autre, desquelles au moins une a une composante du vecteur normal allant chaque fois vers l'axe de rotation, la différence des rayons de courbure dans le point de venue en contact est égal à l'espacement axial et la surface la moins courbée est concave.

4. Dispositif selon la revendication 3, caractérisé en ce que les éléments de raclage sont répartis n fois symétriquement autour de l'axe de rotor, où n signifie un nombre plus grand ou égal à 2.

5. Dispositif selon la revendication 4, caractérisé en ce que les éléments de raclage sont répartis n fois symétriquement autour de l'axe de rotation, où n signifie un nombre plus grand que 4.

6. Dispositif selon la revendication 4, caractérisé en ce que les éléments de raclage sont répartis cinq fois symétriquement autour de l'axe de rotation.

7. Réacteur à plateaux à plusieurs arbres tournant en sens inverses, consistant en deux axes ou plus parallèles, sur lesquels se trouvent des plateaux décalés axialement, non nécessairement circulaires, avec des éléments de raclage répartis sur la périphérie, et un carter entourant, caractérisé en ce,
que dans une coupe radiale, l'extension principale des éléments de raclage enferme un angle avec le rayon,
que dans une coupe radiale, tous les éléments de raclage d'un rotor refoulent vers l'extérieur, tandis que les éléments de raclage d'un rotor se trouvant en prise, tournant en sens inverse, refoulent tous vers l'intérieur,
que toutes les surfaces limitant d'un élément de raclage, dont le vecteur normal, dans une coupe radiale, a une composante s'éloignant de l'axe de rotation, sont convexes, tandis que toutes les surfaces d'un élément de raclage, dont le vecteur normal a une composante allant vers l'axe de rotation, sont concaves.

8. Dispositif selon la revendication 7, caractérisé en ce que sur un rotor, en direction axiale, des éléments de raclage refoulant vers l'extérieur et vers l'intérieur alternent.

9. Dispositif selon les revendications 1 et 2, ou la revendication 3, ou les revendications 7 à 8, caractérisé en ce que les éléments de raclage, dans leur extension axiale, sont exécutés gauchis en forme de spirale.

10. Dispositif selon les revendications 1 à 2, ou les revendications 3 à 6, ou les revendications 7 à 9, caractérisé en ce que des éléments de raclage supplémentaires sont répartis sur les plateaux, sur un plus petit rayon.

11. Dispositif selon une des revendications 1 à 9, caractérisé en ce que les éléments de raclage sur les plateaux, observés en direction axiale, sont agencés décalés d'un angle.
